# EUROPEAN PATENT APPLICATION

(11) **EP 4 520 502 A1**
(43) Date of publication of application: **12.03.2025**
(21) Application number: 23196270.5
(22) Date of filing: 08.09.2023
(51) Int. Cl.: B29C 33/10, B29C 70/44, B29C 70/54, B29L 31/08

(54) **AIR-REMOVING VALVES FOR RESIN FEED CHANNELS**

(71) Applicant: LM Wind Power A/S, 6000 Kolding (DK)
(72) Inventor: ALKEMADE, Harry, 1703DH HEERHUGOWAARD (NL)
(74) Representative: ZBM Patents - Zea, Barlocci & Markvardsen

(57) **Abstract**

In a first aspect, an air-removing valve for removing air from inside a resin feed channel is provided. The air-removing valve comprises an inlet flow to be in fluid communication with the resin feed channel through the aperture; an outlet flow to be coupled to an under-pressure generating source for drawing air from the air-removing valve, a chamber extending from the inlet flow to the outlet flow; and a membrane arranged in the chamber, wherein the membrane is to allow air to pass through and to stop resin from passing through. In a further aspect, a resin infusion feed channel assembly for feeding resin for manufacturing a wind turbine blade component is provided. The resin infusion feed channel comprises a resin feed channel and an air-removing valve according to any of the examples herein. In yet a further aspect, a method for manufacturing a wind turbine blade component is provided.

## Description

The present disclosure relates to air-removing valves for removing air from inside resin feed channels that feed resin in mold cavities of wind turbine blade component molds. The present disclosure further relates to resin infusion feed channel assemblies comprising resin feed channels and air-removing valves. In addition, the present disclosure relates to methods for manufacturing wind turbine blade components with the resin infusion feed channel assemblies.

### BACKGROUND

Modern wind turbines are commonly used to supply electricity to the electrical grid. Wind turbines of this kind generally comprise a rotor with a rotor hub and a plurality of wind turbine blades. The rotor is set into rotation under the influence of the wind on the blades. The rotation of the rotor shaft drives the generator rotor either directly ("directly driven") or through the use of a gearbox. The gearbox (if present), the generator, and other systems are usually mounted in a nacelle on top of a wind turbine tower.

Wind turbine blades are generally made from fiber-reinforced polymers or plastics (FRP's), which are composite materials consisting of a polymer matrix and reinforced with fibers. The fibers are usually glass or carbon and provide longitudinal stiffness and strength. The polymer matrices allow for the fibers to be bound together and add toughness and delamination strength. Polymer matrices are usually made from resins.

Wind turbine blades are commonly manufactured by joining two blade shell parts made from fiber-reinforced polymers, e.g. glass or carbon fiber reinforced polymers. For example, a pressure side blade shell may be bonded to a suction side blade shell through joining lines along the leading edge and the trailing edge. These blade shell parts may be molded using a resin infusion technology or a prepreg technology. In resin infusion technology, fibers are placed in a mold and then, the resin is injected into the mold cavity under pressure. This resin fills the volume of the cavity, and then, the resin is cured or hardened. Examples of resin infusion technology may be Resin Transfer Molding (RTM) or Vacuum Assisted Resin Transfer Molding (VARTM). In VARTM, the resin is injected under a vacuum or pressure lower than atmospheric.

A load-carrying structure may be arranged between the pressure side blade shell and the suction side blade shell. The load-carrying structure may comprise opposite spar caps bonded to the respective blade shell.

Resin infusion technology, such as VARTM, may also be employed for manufacturing other wind turbine blade components, such as shell reinforcing parts, spar caps, or shear webs.

Since blade manufacturing is a complex task, defects may occur during blade manufacturing. A defect is a flaw or weakness in a blade that can trigger a failure of the wind turbine blade in operation. Different types of defects may occur during blade manufacturing. For example, voids and air bubbles may occur during blade manufacturing when air pockets are trapped in the materials of the blade component. During the operation of the wind turbine blade, these voids and air bubbles may create local stress concentrations. Other examples of defects may be dry areas when some areas of the blade component lack resin. These defects may also lead to a reduction of strength of the composite and layers of fibers can also be debonded or delaminated.

Air may accidentally enter the mold cavity when the resin is infused. This air may enter through the resin feed channels. For example, air may enter the resin feed channels through leaking connections. Small pores or apertures in the connections of the resin feed channels may cause the air to enter the resin feed channels. Airtightness of the connections of the resin feed channels may be reduced when the resin feed channels adopt complex paths or when are involuntarily moved. For example, operators may involuntarily move the resin feed channels laid on the mold. This may cause a loss of airtightness in some connections of the resin feed channels. The air then may enter the resin feed channels and, finally, may be fed to the mold cavity. This air inside the mold cavity may generate non-resin areas and air bubbles.

The present disclosure provides examples of systems and methods that at least partially resolve some of the aforementioned disadvantages.

### SUMMARY

In a first aspect, an air-removing valve for removing air from inside a resin feed channel is provided. The air-removing valve is to be arranged at an air-removing portion of a resin feed channel. The resin feed channel is to feed resin into a mold cavity of a wind turbine blade component mold. This air-removing portion comprises an aperture.

The air-removing valve comprises an inlet flow to be in fluid communication with the resin feed channel through the aperture, and an outlet flow to be coupled to an under-pressure generating source for drawing air from the air-removing valve. The air-removing valve further comprises a chamber extending from the inlet flow to the outlet flow; and a membrane arranged in the chamber. The membrane is to allow air to pass through and to stop resin from passing through.

According to this aspect, the air-removing valve may be employed for removing air inside the resin feed channel before reaching the mold cavity. Under pressure may be generated at the outlet flow to force the air and the resin of the resin feed channel to flow towards the air-removing valve. The membrane may then stop the flow of the resin toward the outlet flow. The flow of resin is thus blocked by the membrane. However, the membrane allows resin to pass toward the outlet flow. Air contained in the resin feed channel may thus be extracted. Resin with an air content reduction may thus be directed towards the mold cavity for infusing the blade component.

Defects caused by the presence of air in the blade mold during resin infusion may thus be prevented. Resin infusion processes, such as VARTM techniques, may thus be improved. Furthermore, the quality of the wind turbine blade components may be enhanced.

In a further aspect, a resin infusion feed channel assembly for feeding resin for manufacturing a wind turbine blade component is provided.

The resin infusion feed channel assembly comprises a resin feed channel for feeding resin into a mold cavity of a wind turbine blade component mold. The resin feed channel comprises a feed channel inlet to be coupled to a resin reservoir, and a feed channel outlet for flowing resin from an inside of the resin feed channel to the mold cavity of the wind turbine blade component mold. The resin feed channel further comprises an air-removing portion comprising an aperture.

The resin infusion feed channel assembly further comprises an air-removing valve according to any of the examples herein. The air-removing valve is arranged at the air-removing portion for removing air from inside the resin feed channel.

In yet a further aspect, a method for manufacturing a wind turbine blade component is provided. The method comprises placing a plurality of fibers on a mold surface of a wind turbine blade component mold.

The method further comprises arranging a resin infusion feed channel assembly above the plurality of fibers to provide a resin communication between the resin feed channel and the plurality of fibers. The resin infusion feed channel assembly is according to any of the examples herein.

Furthermore, the method comprises arranging a vacuum bag on top of the resin infusion feed channel assembly and sealing the vacuum bag to the wind turbine blade component mold to define a mold cavity.

In addition, the method comprises generating a vacuum in the mold cavity; and supplying resin to the mold cavity through the resin feed channel to fill the mold cavity and impregnate the plurality of fibers. The method further comprises generating an under-pressure in the outlet flow of the air-removing valve for drawing air from the resin feed channel. Then, the resin is cured to form the wind turbine blade component.

Advantages derived from these aspects may be similar to those mentioned regarding the first aspect.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 shows a perspective view of a wind turbine blade according to one example;
Figure 3 shows a cross-sectional view of a wind turbine blade according to one example of the present disclosure;
Figure 4 schematically represents a cross-sectional view of a wind turbine blade component mold assembly for resin infusing a wind turbine blade component;
Figures 5A - 5C respectively represent air-removing valves according to one example of the present disclosure;
Figure 6 schematically represents a cross-sectional view of a region of a resin infusion feed channel assembly according to one example of the present disclosure;
Figures 7A - 7C respectively represent cross-sectional views of a region of a resin infusion feed channel assembly according to one example of the present disclosure;
Figure 8 schematically represents a resin infusion flow media assembly for manufacturing a wind turbine blade component according to an example of the present disclosure; and
Figure 9 is a block diagram of a method for manufacturing a wind turbine blade component according to one example of the present disclosure.

### DETAILED DESCRIPTION OF EXAMPLES

In these Figures, the same reference signs have been used to designate matching elements.

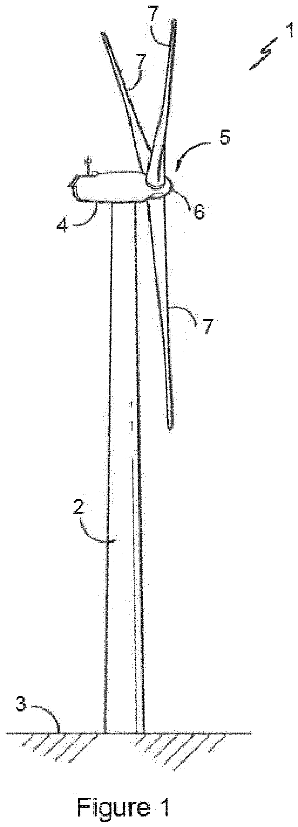

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one wind turbine blade 7 coupled to and extending outwardly from the rotor hub 6. For example, in the illustrated example, the rotor 5 includes three wind turbine blades 7. However, in an alternative example, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator positioned within the nacelle 4 or forming part of the nacelle to permit electrical energy to be produced.

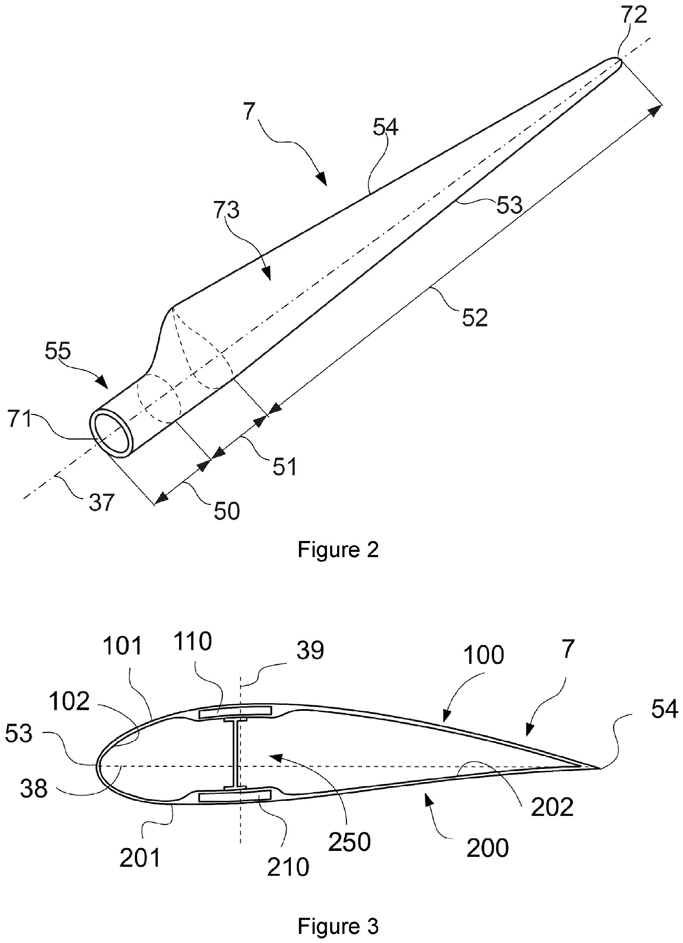

Figure 2 illustrates an example of a wind turbine blade 7. The wind turbine blade 7 extends in a longitudinal direction or lengthwise direction 37 from a blade root end 71 to a blade tip end 72. The blade 7 comprises a blade root region or portion 50 closest to the rotor hub, a profiled or an airfoil portion 52 furthest away from the rotor hub and a transition portion 51 between the blade root portion 50 and the airfoil portion 52. The blade 7 comprises a leading edge 53 facing the direction of rotation of the blade 7 when mounted on the rotor hub, and a trailing edge 54 facing the opposite direction of the leading edge 53.

The airfoil portion 52 has a shape designed to generate lift, whereas the blade root portion 50 has a circular or elliptical cross-section for structural considerations and easy mounting of the blade to the rotor hub. The diameter or the chord of the blade root portion 50 may be constant along the entire blade root portion 50. At the transition portion 51, the profile gradually changes from the circular or elliptical cross-section of the blade root portion 50 to the airfoil profile of the airfoil portion 52. The wind turbine blade 7 may be connected to the rotor hub through a blade root attachment portion 55.

The wind turbine blade 7 comprises a blade shell 73. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure (not shown). The blade shell 73 may be made of fiber-reinforced polymer or plastics, e.g. glass fiber and/or carbon fiber.

The blade shell may be formed by a plurality of blade shell parts. The plurality of blade shell parts may be joined together to form the blade shell. The blade shell parts may be formed and then joined according to any of the examples herein disclosed. Resin infusion technology, e.g. RTM or VARTM, or prepreg technology may be used for manufacturing the blade shell parts.

Figure 3 shows a cross-sectional view of a wind turbine blade 7 according to one example of the present disclosure. A suction side blade shell part or upper blade shell part 100, and a pressure side blade shell part or lower blade shell part 200 extend from the leading edge 53 to the trailing edge 54. The wind turbine blade 7 further comprises a chord line 38 between the leading edge 53 and the trailing edge 54. The chord line 38 extends in an edgewise direction or chordwise direction. A flapwise direction 39 is substantially perpendicular to the chord line 38. The upper blade shell part 100 and the lower blade shell part 200 are joined, e.g. bonded, together along the leading edge 53 and the trailing edge 54.

The blade shell parts 100, 200 respectively comprise an outer layer 101, 201 and an inner layer 102, 202. The outer layers 101, 201 define an outer shape of the blade shell part 100 and the inner layers 102, 202 define an inner shape of the blade shell parts 100, 200. The upper blade shell part 100 of this example comprises an upper spar cap structure 110 embedded between the upper outer layer 101 and the upper inner layer 102. Similarly, the lower blade shell part 200 comprises a lower spar cap structure 210 between the lower outer layer 201 and the lower inner layer 202. The spar cap structures 110, 210 structurally reinforce the corresponding blade shell parts 100, 200.

The outer layers 101, 201 and the inner layers 102, 202 may comprise glass fibers embedded in resin. For example, one or more glass fiber laminates may be arranged to form these layers. The fibers, e.g. glass fibers, may be oriented bidirectionally to enhance the torsional stiffness of the blade 7. In other examples, the fibers may be arranged unidirectionally or triaxially. In further examples, the inner and outer layers comprise laminates with unidirectional fibers and laminates with bidirectional fibers.

A core structure may be arranged between the outer layer 101, 201 and the inner layer 102, 202 in some parts of the blade shell part 100, 200. For example, a core structure may extend a portion between the spar cap structure 110, 210 and the leading edge 53. Additionally, or alternatively, a core structure may extend a portion between the spar cap structure 110, 210 and the trailing edge 54. The core structure generally increases the thickness of the blade shell part so as to improve the stiffness without an excessive weight increase. The core structure may be made from a lightweight material such as balsa, wood or polymer foam, or any combination of them. Blade shell parts of this kind may be known as sandwich panels.

The blade shell parts may be manufactured in a mold and then joined together to define the entire blade shell of the wind turbine blade 7. The fibers and/or the core structure may be embedded in resin. The reinforcing fibers and/or the core structure may be arranged on a mold surface of a blade shell part mold and resin may be fed through a resin infusion technology, e.g. VARTM. The reinforcing fibers may be glass fibers, carbon fibers, aramid, or basalt. Examples of resins may include epoxy, polyester, or vinyl ester resin. The orientation of the fibers of each of the layers may vary. For example, some layers comprise unidirectional fibers and other layers biaxial fibers. Some layers may also comprise triaxial fibers. The reinforcement fibers may be arranged in fabrics and/or in pultrusions.

The spar caps comprise reinforcing fibers, e.g. carbon and/or glass fibers. The fibers may be arranged in fabrics and/or in pultrusions. The spar caps may be prefabricated before being arranged on the blade shell part mold. The spar caps may be manufactured through a resin infusion technology in a dedicated spar cap mold. Alternatively, the fibers of the spar caps may be infused together with the fibers of the remaining parts of the blade shell part.

In this example, the wind turbine blade 7 comprises a reinforcing structure 250 arranged between the upper blade shell part 100 and the lower blade shell part 200. The reinforcing structure 250 provides stiffness to the wind turbine blade. The reinforcing structure extends between the upper spar cap structure 110 and the lower spar cap structure 210. The reinforcing structure of this example comprises a beam or web extending a length along the spanwise direction 37, e.g. between the root portion and the tip portion. The beam may comprise an upper flange and a lower flange. The upper flange is joined to the upper blade shell part 100 and the lower flange is joined to the lower blade shell part 200. In further examples, the reinforcing structure comprises two or more webs extending between the flanges. This configuration may be generally known as a spar box configuration.

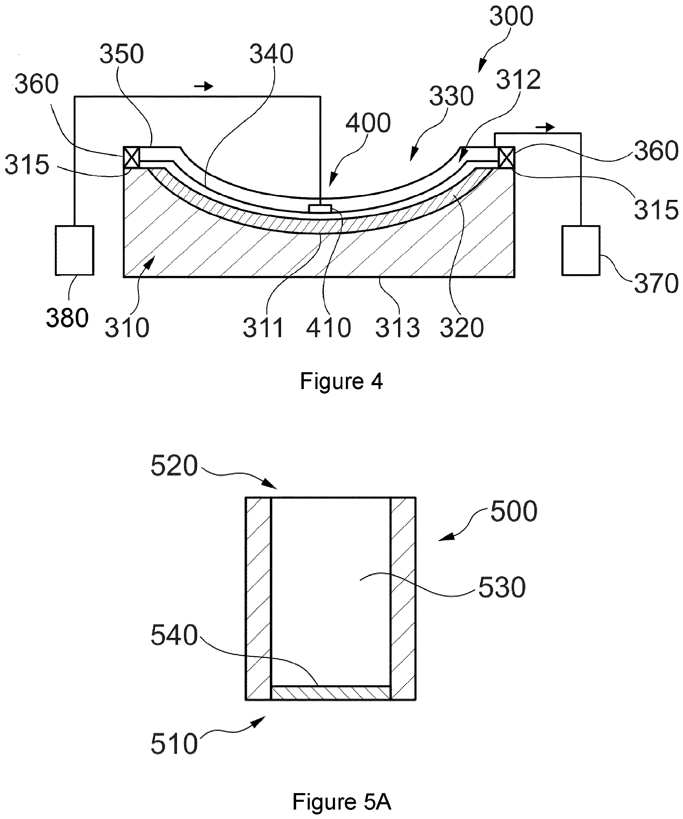

Figure 4 schematically represents a cross-sectional wind turbine blade component mold assembly for resin infusing a wind turbine blade component. The wind turbine blade component may be a blade shell part, e.g. an upper blade shell part or a lower blade shell part, and/or a spar cap structure. The blade shell part may also be a leading edge reinforcement and/or a trailing edge reinforcement.

The blade component mold assembly 300 comprises a wind turbine blade component mold 310. The blade component mold 310 is a rigid mold and comprises two side rims 315. The blade component mold 310 comprises a bottom surface 313 to be arranged on a flat surface, e.g. on the floor of a factory plant. The bottom surface 313 is a substantially flat surface. The blade component mold 310 further comprises a mold surface 311 to shape the blade component. The mold surface 311 defines the outer shape of the wind turbine component. The mold surface 311 is opposite to the bottom surface 313. The mold surface 311 extends between the side rims 315. The distance between the mold surface 311 and the bottom surface 313 may vary along the longitudinal direction of the blade component mold 310.

A plurality of fibers 320 are arranged on top of the mold surface 311. The fibers may be arranged in layers of fabric or in layers of pultrusions. The fibers may comprise carbon and/or glass fibers. A core structure may be arranged between fibers.

A resin infusion flow media assembly 330 is placed over the plurality of fibers 320. The resin infusion flow media assembly 330 of this example comprises a distribution layer 340 and a resin infusion feed channel assembly 400. The distribution layer 340 enhances the distribution of the resin in the mold cavity 312. The distribution layer 340 may comprise a mesh that helps resin to flow in a transverse direction and in a longitudinal direction. However, in other examples, the resin infusion feed channel assembly 400 may be placed directly over the plurality of fibers 320. In these examples, the resin infusion flow media assembly 330 does not comprise a distribution layer 340.

In this example, the resin infusion feed channel assembly 400 comprises a resin feed channel 410 for feeding resin to the mold cavity 312. In some examples, the resin infusion flow media assembly 330 may comprise a plurality of resin feed channels 410.

A vacuum bag 350 is arranged on top of the resin infusion feed channel assembly 400. Sealing elements 360 are arranged at both side rims 315 of the blade component mold 310 for sealing the mold cavity 312 defined between the mold surface 311 and the vacuum bag 350.

The blade component mold assembly 300 of this example further comprises a vacuum source 370 to create a vacuum in the mold cavity 312. The pressure in the mold cavity 312 may thus be lower than the atmospheric pressure.

When a vacuum is generated in the mold cavity 312, resin is fed into the mold cavity 312. A resin reservoir 380 is connected to the resin feed channel 410 to supply resin to the mold cavity 312. The resin supplied to the mold cavity 312 may fill the gaps between the fibers 320 arranged on the mold 310. The fibers 320 are then impregnated with the resin to form the blade component.

The resin feed channel 410 of this example extends in a longitudinal direction. The resin feed channel 410 of this example comprises a feed channel inlet coupled to the resin reservoir 380. In some examples, the feed channel inlet may be arranged at one end of the resin feed channel 410 along the longitudinal direction. In further examples, the feed channel inlet may be arranged at a central portion along the longitudinal direction. The resin feed channel 410 further comprises a feed channel outlet for flowing resin from an inside of the resin feed channel 410 to the mold cavity 312. In some examples, the feed channel outlet may comprise a plurality of openings arranged along the longitudinal direction. In some examples, the feed channel outlet may extend a length along the longitudinal direction, e.g. may extend the entire length of the resin feed channel 410. The resin may thus enter the mold cavity 312 at different positions along the longitudinal direction.

The feed channel outlet may be arranged on top of the distribution layer 340. Resin may flow through the feed channel outlet towards the distribution layer 340. The distribution layer 340 may then contribute to homogenizing the flow of resin within the mold cavity. In further examples, the feed channel outlet may be arranged on top of the plurality of layers 320 and resin may thus directly flow from the feed channel outlet to the plurality of layers 320.

Although not shown in Figure 4, the resin infusion feed channel assembly 400 comprises an air-removing valve to remove air from the resin feed channel 410. The air-removing valve is arranged in an air-removing portion (not shown in this figure) of the resin feed channel 410. The air-removing portion is a region of the resin feed channel 410 prone to accumulating air contained in the resin feed channel when resin flows. As wind turbine blades generally have a prebend configuration, wind turbine components may also follow this prebend configuration. Wind turbine blades may also taper from the root portion to the tip portion. Airfoil shapes along the wind turbine blade may thus also comprise several cross-sections and the thickness of the blade may vary along the spanwise direction 37 of the wind turbine blade. Distance between the mold surface 311 and the bottom surface 313 may vary to form the blade component with a prebend or different cross-sectional shapes along the spanwise directions. As a result, the distance between the resin feed channel 410 and the bottom surface 313 may vary along the longitudinal direction of the mold 310. The height of the resin feed channel 410 may therefore be variable along its longitudinal direction. Furthermore, the resin feed channel 410 may comprise up and/or down regions to follow the shape of the wind turbine component.

As the density of the air is lower than the density of the resin, air tends to rise. Higher regions of the resin feed channel 410 may thus be prone to accumulate air. For example, the air-removing portion may be the highest portion of the resin feed channel 410.

Figures 5A - 5C respectively represent examples of air-removing valves according to one example of the present disclosure. The air-removing valve 500 of these examples comprises a chamber 530 extending from an inlet flow 510 to an outlet flow 520. An inner surface of a side wall or of a plurality of side walls may define the chamber 530.

The inlet flow 510 is configured to be connected to an aperture formed in a resin feed channel 410. The inlet flow 510 may thus be in fluid communication with the resin feed channel 410 through the aperture. Resin contained in the resin feed channel 410 may thus reach the inlet flow 510. The inlet flow 510 may be sealingly connected to the aperture. The inlet flow 510 may comprise a sealing connector for sealingly connecting the inlet flow 510 to the aperture. The sealing connector may comprise a sealing ring, e.g. an elastomeric sealing ring. The sealing connector may fit the shape of the inlet flow 510. The sealing connector may rest on an outer surface of the resin feed channel 410 around the aperture. The aperture may thus be enclosed by the inlet flow 510.

The outlet flow 520 is configured to be coupled to an under-pressure generating source for drawing air from the air-removing valve 500. Air contained in the chamber 530 may thus be forced to exit through the outlet flow 520. The under-pressure generating source may be a vacuum source. The vacuum source may be a dedicated vacuum source, or a vacuum source also used for extracting air from the mold cavity 312.

The air-removing valve 500 further comprises a membrane 540 arranged within the chamber 530. The membrane 540 is configured to allow air to pass through but stop the resin from passing through. The membrane 540 is an air-permeable resin barrier. The membrane 540 prevents resin from passing toward the outlet flow 520. As the membrane 540 stops the flow of resin but allows air to pass through, air but not resin contained in the resin feed channel may be sucked by the under-pressure generating source connected to the outlet flow 520.

The membrane may comprise a plurality of micro-pores. The size of the micro-pores may be greater than air components and smaller than resin components. Air may thus pass through these micro-pores and restrict the passage of resin.

The membrane 540 may be manufactured from fabrics. Polyamide fibers, e.g. from nylon, may be examples of fabrics for manufacturing the membrane. Other materials with a micro-porosity structure may alternatively be used.

In some examples, the membrane 540 may comprise a reinforcing structure. The reinforcing structure may increase the mechanical properties of the membrane. An excessive buckling or bending of the membrane may be reduced with this reinforcing structure. The reinforcing structure may comprise a mesh and/or a perforated sheet. This reinforcing structure may be attached to the fabrics of the membrane.

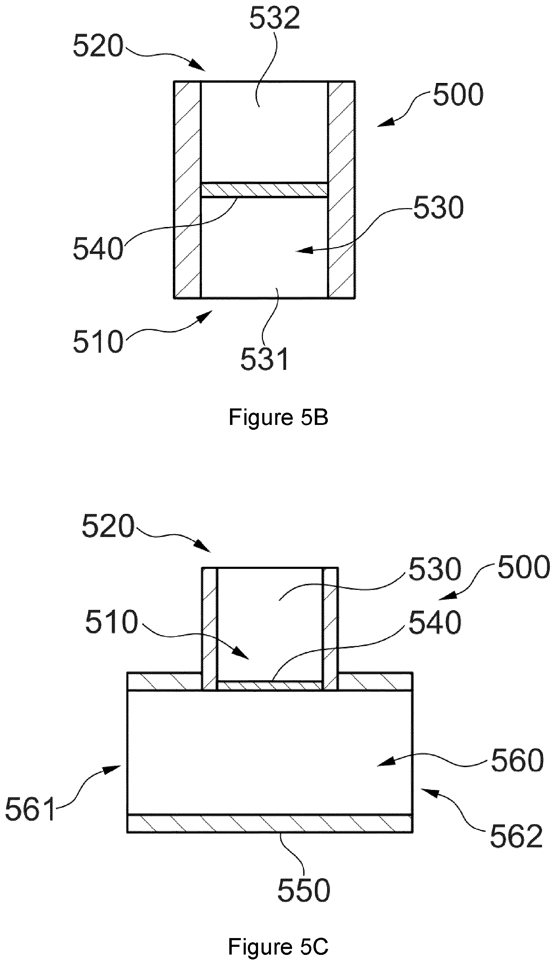

In Figures 5A and 5C, the membrane 540 is arranged at the inlet flow 510. Resin is thus prevented from entering the chamber 530. In Figure 5B, the membrane 540 is arranged at a central portion of the chamber for separating the chamber into a first chamber part 531 and a second chamber part 532. The first chamber part 531 extends from the inlet flow to the membrane 540 and the second chamber part 532 from the membrane 540 to the outlet flow 520. The first chamber part 531 of figure 5B is thus in fluid communication with the inlet flow 510.

The air-removing valve 500 of Figure 5C further comprises a housing 550. The housing 550 of this figure encloses the inlet flow 510. The chamber 530 may perpendicularly extend from the housing 550. The housing 550 of this example is configured to enclose the air-removing portion of the resin feed channel 410. The aperture of the resin feed channel 410 may thus be enclosed in the housing 550.

The housing 550 of this figure comprises a connecting cavity 560 to receive the air-removing portion of the resin feed channel 410. The resin feed channel 410 may thus be inserted into the connecting cavity 560. The aperture may thus be arranged within the connecting cavity 560.

The connecting cavity 560 of Figure 5C extends between a first end 561 and a second end 562. In this figure, the connecting cavity 560 and the chamber 530 are substantially perpendicular. The outlet flow 520 is in air communication with the connecting cavity 560 through the membrane 540.

In this example, the outlet flow 520 protrudes from the housing 550. The connection of the outlet flow 520 to the under-pressure generating source may be simplified. For example, one end of a house may be easily connected to the outlet flow 520 and the opposite end may be connected to the under-pressure generating source.

In some examples, the chamber 530 may be fixedly connected to the housing 550. For example, a side wall or side walls of the chamber 530 may be attached to the housing, e.g. glued or welded. In other examples, the chamber 530 may be slidably connected to the housing 550. A screw connection may be used to relatively move and connect the chamber 530 to the housing. The position of the chamber 530 may be adjusted to the size of the resin feed channel 410.

In some examples, a sealing member may be arranged between the side walls of the chamber 530 and the housing 550. Alternatively, or additionally, a sealing connector may be arranged at the inlet flow 510 to seal the connection between the aperture and the inlet flow 510.

In some examples, the housing 550 may comprise two housing parts. These housing parts may be arranged around the resin feed channel 410 and then connected to each other to define the connecting cavity 560. Mounting the air-removing valve may thus be simplified.

In some examples, the first end 561 and/or the second end 562 of the connecting cavity 560 may comprise a sealing member to form a sealing connection between the outer surface of the resin feed channel 410 and the ends 561, 562 of the connecting cavity 560. Resin flowing through the aperture may thus be retained within the air-removing valve 500.

In some examples, the housing 550 may further comprise an opening configured to receive a feed channel inlet of a resin feed channel. This feed channel inlet may be coupled to a resin reservoir to supply resin to the resin feed channel. The opening may be in fluid communication with the connecting cavity 560. This may reduce the number of components for supplying resin to the cavity mold.

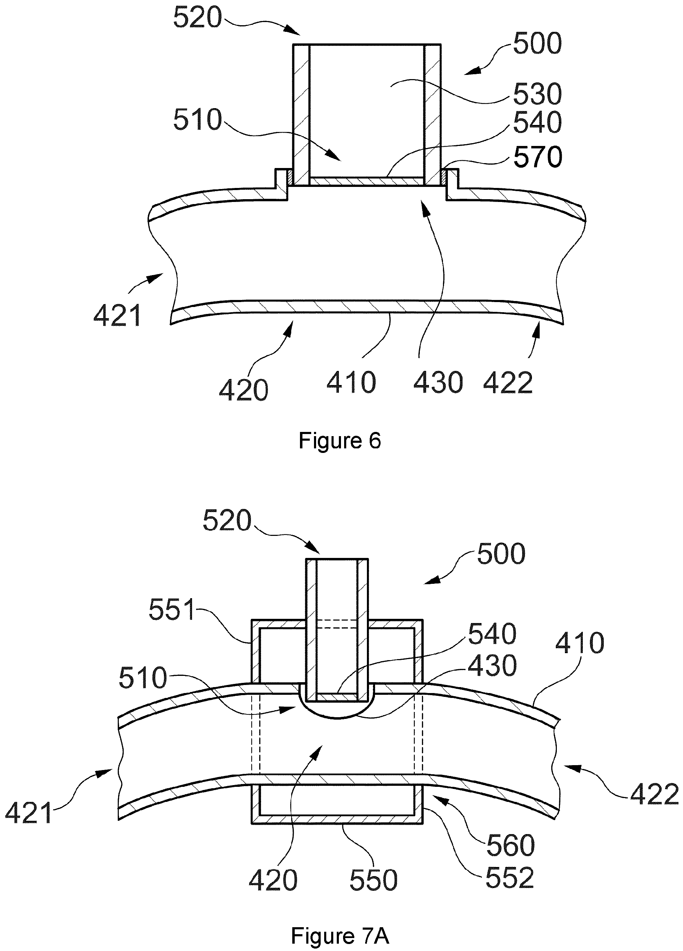

Figure 6 schematically represents a cross-sectional view of a region of resin infusion feed channel assembly according to one example of the present disclosure. The resin infusion feed channel assembly 400 comprises resin feed channel 410 and an air-removing valve 500. The air-removing valve 500 may be according to any of the examples herein.

The resin feed channel 410 comprises a feed channel inlet (not shown in this figure) to be coupled to a resin reservoir and a feed channel outlet (not shown in this figure) to flow resin from inside the resin feed channel 410 to the mold cavity 312. The resin feed channel 410 may be according to any of the examples herein.

The resin feed channel 410 of this figure comprises an air-removing portion 420 comprising an aperture 430. The aperture 430 of this example is defined in an upper portion of the outer surface of resin feed channel 410. The air-removing portion 420 of this example is arranged in a region prone to accumulate air, e.g. in the highest region of the resin feed channel 410.

In this example, the air-removing portion 420 is arranged between a first portion 421 and a second portion 422. The first portion 421 ascends towards the air-removing portion 420 and the second portion 422 descends from the air-removing portion 420. Resin (and air) may go upwards along the first portion 421, air may be removed from the air-removing portion 420, and then, resin with a lower air content may go downwards along the second portion 422 to fill the mold cavity 312.

In this example, the inlet flow 510 of the air-removing valve 500 is coupled to the aperture 430 of the resin feed channel 410. A sealing connector 570 is arranged between the outer surface of the chamber 530 and the aperture 430. In this example, the sealing connector 570 is arranged between an outer perimeter of inlet flow 510 and an inner perimeter of the aperture 430. The sealing connector 570 enhances the sealing effect between the air-removing valve 500 and the resin feed channel 410. Air leaks are thus prevented. Accordingly, air contained in the resin feed channel may be forced to pass through the membrane 540 when an under pressure is generated at the outlet flow 520.

Figures 7A - 7C respectively represent cross-sectional views of a region of a resin infusion feed channel assembly according to one example of the present disclosure.

The resin feed channel 410 of these examples extends in a longitudinal direction. When the resin feed channel 410 is arranged in the wind turbine blade component mold 310, this longitudinal direction may be substantially parallel to the spanwise direction 37 of the wind turbine blade component, e.g. an upper blade shell part or a lower blade shell part. As the wind turbine blade components vary along its spanwise direction 37, the height of the resin feed channel 410 may also vary along its longitudinal direction. The resin feed channel 410 may thus comprise a highest region and a lowest region. The highest region may be a region susceptible to accumulate air.

The highest region shall be understood as the region(s) having a maximum distance between the resin feed channel 410 and the bottom surface 313 of the component mold 310 when the resin feed channel is arranged within the mold cavity 312 for supplying resin. A lowest region shall be understood as the region(s) having a minimum distance between the resin feed channel 410 and the bottom surface 313 of the component mold 310 when the resin feed channel is arranged within the mold cavity 312 for supplying resin.

In Figure 7A, the aperture 430 is a notch formed at the upper surface of the resin feed channel 410. In this example, the resin feed channel 410 comprises a first portion 421 going upwards to the air-removing portion and a second portion 422 going downwards from the air-removing portion.

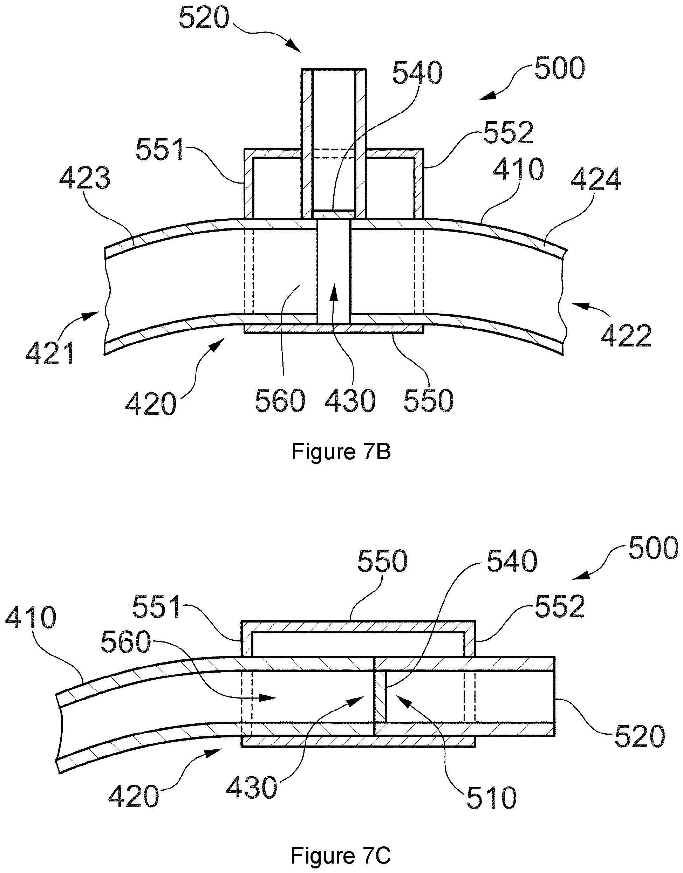

In Figure 7B, the aperture 430 is formed by a gap between a first channel segment 423 and a second channel segment 424. The first channel segment 423 is thus comprised in the first portion 421 going upwards and the second channel segment 424 is comprised in the second portion 422 going downwards. The air-removing valve 500 connects the first channel segment 423 to the second channel segment 424.

In Figure 7C, the resin feed channel 410 extends between a first end and a second end. The aperture 430 is arranged at the second end of the resin feed channel 410. In some examples, the second end may correspond to the tip portion of the blade component. In other examples, the second end may correspond to the root portion of the blade component. The second end may be arranged highest than other regions of the resin feed channel 410. The air-removing valve 500 of this example thus covers or closes one end of the resin feed channel 410.

In figures 7A - 7C, the air-removing valve 500 comprises a housing 550 enclosing the inlet flow 510 and the air-removing portion 420 of the resin feed channel 410. The housing 550 thus encloses the aperture 430 of the resin feed channel 410. The housing 550 comprises a connecting cavity 560 enclosing the air-removing portion 420.

In Figures 7A and 7B, the connecting cavity 560 extends between one opening formed at the first lateral wall 551 of the housing 550 and another opening formed at the second lateral wall 552 of the housing 550. The resin feed channel 410 thus runs between the first lateral wall 551 and the second lateral wall 552 of the housing 550. In Figure 7C, the resin feed channel 410 also enters the connecting cavity 560 through an opening formed at the first lateral wall 551, however, the resin feed channel 410 does not exit through the second lateral wall 552. These openings substantially fit the outer shape of the resin feed channel 410. A sealing member at these openings to improve the sealing connection between the air-removing valve 500 and the resin feed channels.

Sealing members or connectors may also be provided between the aperture 430 and the inlet flow 510. Additionally, or alternatively, sealing members or connectors may be provided between the housing and the outer surface of the walls defining the chamber.

In Figures 7A - 7B, the connecting cavity 560 is substantially perpendicular to the chamber 530 containing the membrane 540. However, in Figure 7C, the connecting cavity 560 and the chamber 530 are substantially parallel.

In these figures, the housing 550 comprises a bottom wall extending between the first lateral wall 551 and the second lateral wall 552. However, in other examples, the housing may be open, i.e. without a bottom wall extending between the lateral walls 551, 552.

In Figures 7B - 7C, the resin feed channel 410 rests on the inner surface of the bottom wall. However, in Figure 7A, the inner surface of the bottom wall of the housing is apart from the resin feed channel 410. This may increase the height of the aperture 430 to facilitate the accumulation of air in the air-removing portion 420 of the resin feed channel 410.

Although not shown in these figures, the housing 550 may comprise an opening configured to receive a feed channel inlet of a resin feed channel. The opening may be in fluid communication with connecting cavity 560. Resin may thus be supplied to the resin feed channel 410 through the housing 550.

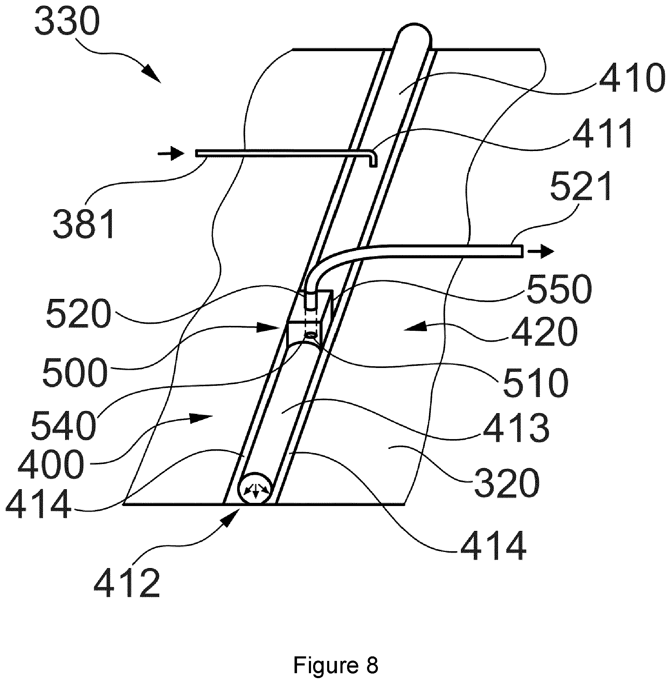

Figure 8 schematically represents a resin infusion flow media assembly for manufacturing a wind turbine blade component according to an example of the present disclosure. The resin infusion flow media assembly 330 may be used for resin infusing a wind turbine blade component. The resin infusion flow media assembly 330 may be employed in a wind turbine component mold assembly according to any of the examples herein.

The resin infusion flow media assembly 330 of this example comprises a resin infusion feed channel assembly 400 placed above the plurality of fibers 320.

In some examples, the resin infusion flow media assembly may further comprise a distribution layer 340 configured to be placed above a plurality of fibers 320 arranged on a wind turbine blade component mold 310. The distribution layer 340 may extend between the side rims 315 of the mold 310.

The resin infusion feed channel assembly 400 of this example comprises a resin feed channel 410 and an air-removing valve 500. In other examples, the resin infusion flow media assembly 330 may comprise a plurality of resin infusion feed channel assemblies 400. Each of the resin infusion feed channel assemblies 400 comprises a resin feed channel 410 and an air-removing valve 500.

The resin infusion flow media assembly 330 may be employed for resin infusing a wind turbine blade shell part. In these examples, the resin infusion flow media assembly 330 may comprise a plurality of resin infusion feed channel assemblies 400 on top of the plurality of layers 320 and/or on top of the distribution layer 340. The resin feed channels 410 may extend in a direction substantially parallel to the spanwise direction 37 of the wind turbine blade shell part. The length of these resin feed channels 410 may be different.

In some examples, a single resin reservoir may be used for supplying resin to the feed channel inlet of the plurality of resin feed channels 410. In other examples, several resin reservoirs may be used to supply resin to the resin feed channels 410.

In some examples, each air-removing valve 500 is connected to a different under-pressure generating source. In other examples, a single under-pressure generating source may be connected to the plurality of air-removing valves 500. In further examples, these single under-pressure generating sources may be a vacuum source to create a vacuum on the mold cavity 312 for resin infusion.

Referring back to Figure 8, the resin feed channel 410 is in resin communication with the plurality of layers 320. Resin inside the resin feed channel 410 may thus flow towards the plurality of layers 320.

Resin may enter into the resin feed channel 410 through the feed channel inlet 411. A hose 381 may connect the feed channel inlet 411 to the resin reservoir. In this example, the feed channel inlet 411 is arranged at a central portion of the resin feed channel 410. In other examples, the feed channel inlet 411 may be arranged at proximal or distal portions of the resin feed channel 410.

In some examples, the feed channel inlet 411 may be connected to an opening formed at the housing 550 of the air-removing valve 500.

In this example, the resin feed channel 410 comprises an open longitudinal profile having two sides 414 in contact with the plurality of layers 320 to form a passage for the resin. In other examples, the sides 414 of the open longitudinal profile may be in contact with the distribution layer. In this example, the open longitudinal profile comprises a round omega profile 413. The two sides 414 extend from the round omega profile 413. The round omega profile 413 may thus be closed by the plurality of fibers 320 or by the distribution layer 340. The resin feed channel 410 of this example is thus defined by the round omega profile 413 and the plurality of fibers 320. In other examples, the open profile may be a straight omega profile. In further examples, any type of suitable open longitudinal profiles may be used.

In this example, the feed channel outlet 412 is the bottom open space of the round omega profile 413. The feed channel outlet 412 of this example extends along the round omega profile 413. Resin flowing inside the resin feed channel 410 may be transferred through the bottom open space of the round omega profile 413 to the plurality of fibers 320. A distribution layer 340 may be used for increasing the homogeneity of the resin distribution within the mold cavity 312.

The air-removing valve 500 of this example is arranged at an air-removing portion 420 of the resin feed channel 410. The inlet flow 510 of this example fits an aperture formed at an upper portion of the round omega profile 413. The outlet flow 520 of this example is connected to an under-pressure generating source through an under-pressure hose 521. Resin and air inside the round omega profile 413 may be pulled towards the air-removing valve 500 by the action of the under-pressure generated on the outlet flow 520. Air is allowed to pass the membrane 540 but resin remains in the resin feed channel.

The air-removing valve 500 of this example comprises a housing 550. The housing 550 of this figure encloses the aperture of the resin feed channel 410. The housing 550 of this example comprises a substantial U-shape. The housing 550 may substantially fit the outer shape of the round omega profile 413. In some examples, the housing may rest on the two sides 414 of the round omega profile 143. This may help to provide sealing members to improve the airtightness of the connection between the inside the resin feed channel 410 and the air-removing valve 500.

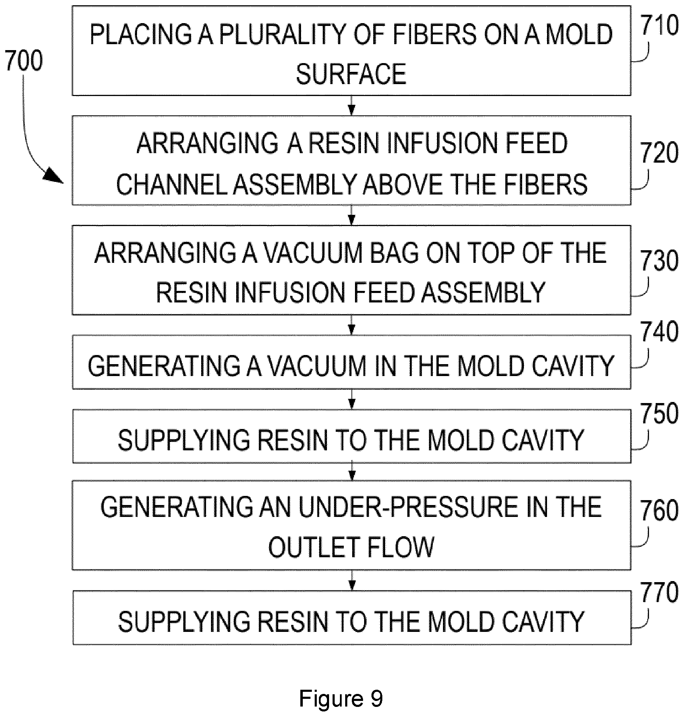

Figure 9 is a block diagram of a method for manufacturing a wind turbine blade component according to one example of the present disclosure. The method 700 may be used for manufacturing a wind turbine blade component according to any of the examples herein, e.g. wind turbine blade shell parts and/or spar caps. The method 700 may be performed in a wind turbine blade component mold assembly according to any of the examples herein.

The method 700 comprises placing a plurality of fibers 320 on a mold surface 311 of a wind turbine blade component mold 310, as represented at block 710. The blade component mold 310 may be according to any of the examples herein. The plurality of fibers 320 may be arranged in layers of fabrics and/or forming rows of pultrusions. Core structures may be arranged between layers of fibers.

In some examples, a gel coat may be placed on the mold surface prior to arranging the fibers 320.

At block 720, arranging a resin infusion feed channel assembly 400 above the plurality of fibers 320 to provide a resin communication between the resin feed channel 410 and the plurality of fibers 320 is represented. The resin infusion feed channel assembly 400 is according to any of the examples herein. The resin infusion feed channel assembly comprises a resin feed channel 410 to supply resin to the plurality of fibers 320 and an air-removing valve 500 to remove air from the resin feed channel 410.

In some examples, the method may comprise arranging a plurality of resin infusion feed channel assemblies 400 above the plurality of fibers 320. The surface covered by the resin infused may thus be increased.

In some examples, arranging the resin infusion feed channel assembly 400 may comprise arranging the air-removing valve 500 at an air-removing portion 420 of the resin feed channel 410. The air-removing portion 420 may be according to any of the examples herein.

In some examples, the method 700 may comprise placing a distribution layer 340 above the plurality of fibers 320 prior to arranging the resin infusion feed channel assembly 400. A distribution layer 340 according to any of the examples herein may be arranged on top of the fibers 320. The distribution layer 340 may thus cover the fibers arranged on the mold surface 311. The distribution layer 340 may receive resin and distribute this resin in a more homogeneous manner to fill the gaps between the fibers.

The method 700 further comprises arranging a vacuum bag 350 on top of the resin infusion feed channel assembly 400 and sealing the vacuum bag 350 to the wind turbine blade component mold 310 to define a mold cavity 312, as represented at block 730. The vacuum bag 350 may be placed above the resin infusion feed channel assembly, the fibers 320 and the distribution layer 340 (if placed over the fibers 320). The vacuum bag 350 thus covers the fibers 320 arranged on the mold 310. The vacuum bag 350 may extend to side rims 315 of the mold 310. Sealing elements 360 may be provided at both side rims 315 for sealing the vacuum bag to the mold 310. An air-tight mold cavity 312 to receive resin may thus be created.

At block 740, a vacuum is generated in the mold cavity 312. The vacuum bag 350 may be connected to a vacuum source to remove air from the mold cavity 312.

At block 750, resin is supplied to the mold cavity 312 through the resin feed channel 410 to fill the mold cavity 312 and impregnate the plurality of fibers 320. The vacuum inside the mold cavity 312 allows the resin to flow from the resin reservoir to the mold cavity through the resin feed channel(s). Resin enters the resin feed channel 410 from the feed channel inlet 411 and exits towards the plurality of fibers 320 through the feed channel outlet 412.

The method 700 further comprises generating an under-pressure in the outlet flow 520 of the air-removing valve 500 for drawing air from the resin feed channel 410, as represented at block 760. Air contained in the resin feed channel 410 may thus be extracted. Generating an under-pressure in the outlet flow 520 may comprise activating an under-pressure generating source to create an under-pressure in the outlet flow 520. This may force the air contained in the resin feed channel 410 to pass through the membrane 540.

The under-pressure in the outlet flow may be generated simultaneously with flowing resin through the resin feed channel 410. Resin flowing towards the fibers 320 may thus contain a reduced air content.

At block 770, the resin is cured to form the wind turbine blade component. After distributing the resin within the mold cavity 312, the resin is allowed to cure to obtain the desired properties. In some examples, curing may involve heating the resin that impregnates the fibers.

In some examples, the air-removing valve 500 and the resin feed channel 410 may be pre-assembled. The air-removing valve 500 may thus be connected to the resin feed channel 410 prior to being arranged on the mold 310. This may simplify the assembly.

In some examples, the method may comprise sealingly connecting the inlet flow 510 of the air-removing valve 500 to the aperture 430 of the air-removing portion 420 of the resin feed channel 410. The inlet flow 510 may be connected to the resin feed channel according to any of the examples herein. In some examples, the method may further comprise forming an aperture on the resin feed channel 410. These operations may be performed prior to being arranged on the mold 310 or even when the resin feed channel 410 is laid on the mold 310. Sealing connecting the inlet flow 510 of the air-removing valve 500 to the aperture 430 may be performed prior to arranging the resin infusion feed assembly above the plurality of fibers 320.

In some examples, the method may further comprise connecting the under-pressure generating source to the outlet flow 520.

In some examples, the air-removing valve 500 may comprise a housing 550 according to any of the examples herein. The housing may surround the air-removing portion 420 of the resin feed channel 410 and the inlet flow 510. The housing may comprise a connecting cavity 560 to receive the air-removing portion of the resin feed channel 410. In these examples, the method may comprise inserting the air-removing portion 420 of the resin feed channel 410 into the connecting cavity 560. In some examples, this insertion may be performed prior to arranging the resin feed channel 410 on top of the plurality of fibers 320 or over the distribution layer 340.

For reasons of completeness, various aspects of the present disclosure are set out in the following numbered clauses:
Clause 1: An air-removing valve for removing air from inside a resin feed channel, wherein the air-removing valve is to be arranged at an air-removing portion of a resin feed channel, wherein the resin feed channel is to feed resin into a mold cavity of a wind turbine blade component mold, and wherein the air-removing portion comprises an aperture; the air-removing valve comprising:
   an inlet flow to be in fluid communication with the resin feed channel through the aperture;
   an outlet flow to be coupled to an under-pressure generating source for drawing air from the air-removing valve;
   a chamber extending from the inlet flow to the outlet flow; and
   a membrane arranged in the chamber, wherein the membrane is to allow air to pass through and to stop resin from passing through.
Clause 2: The air-removing valve according to clause 1, wherein the membrane is arranged at the inlet flow.
Clause 3: The air-removing valve according to clause 1, wherein the membrane is arranged at a central portion of the chamber for separating the chamber into a first chamber part and a second chamber part.
Clause 4: The air-removing valve according to any of clauses 1 - 3, wherein the inlet flow comprises a sealing connector for sealingly connecting the inlet flow to the aperture.
Clause 5: The air-removing valve according to any of clauses 1 - 4, comprising a housing to at least surround the air-removing portion of the resin feed channel and the inlet flow.
Clause 6: The air-removing valve according to clause 5, wherein the housing comprises a connecting cavity to receive the air-removing portion of the resin feed channel.
Clause 7: The air-removing valve according to any of clauses 5-6, wherein the outlet flow protrudes from the housing.
Clause 8: The air-removing valve according to any of clauses 1-7, wherein the membrane comprises a plurality of pores, wherein the size of the pores is greater than air components and smaller than resin components.
Clause 9: A resin infusion feed channel assembly for feeding resin for manufacturing a wind turbine blade component, the resin infusion feed channel assembly comprising:
   a resin feed channel for feeding resin into a mold cavity of a wind turbine blade component mold, wherein the resin feed channel comprises:
      a feed channel inlet to be coupled to a resin reservoir;
      a feed channel outlet for flowing resin from an inside of the resin feed channel to the mold cavity of the wind turbine blade component mold;
      an air-removing portion comprising an aperture;
   an air-removing valve according to any of clauses 1-8, wherein the air-removing valve is arranged at the air-removing portion for removing air from inside the resin feed channel.
Clause 10: The resin infusion feed channel assembly according to clause 9, wherein the resin feed channel is to extend in a longitudinal direction having a highest region and a lowest region when arranged within the blade component mold; and wherein the air-removing portion is arranged at the highest region.
Clause 11: The resin infusion feed channel assembly according to any of clauses 9 - 10, wherein the aperture comprises a notch formed on the resin feed channel.
Clause 12: The resin infusion feed channel assembly according to any of clauses 9 - 11, wherein the resin feed channel comprises a first channel segment and a second channel segment, and wherein the air-removing valve connects the first channel segment to the second channel segment.
Clause 13: The resin infusion feed channel assembly according to any of clauses 9 - 12, wherein the resin feed channel extends between a first end and a second end, and wherein the aperture is arranged at one of the first and the second end.
Clause 14: The resin infusion feed channel assembly according to any of clauses 9 - 13, wherein the resin feed channel comprises an open longitudinal profile having two sides to be in contact with a distribution layer and/or a plurality of fibers to form a passage for the resin.
Clause 15: The resin infusion feed channel assembly according to clause 14, wherein the open longitudinal profile comprises an omega profile.
Clause 16: A resin infusion flow media assembly for manufacturing a wind turbine blade component, the resin infusion flow media assembly comprising:
   a distribution layer to be placed above a plurality of fibers;
   a resin feed channel assembly according to any of clauses 9 - 15, wherein the resin feed channel is arranged above the distribution layer, and wherein the resin feed channel is in resin communication with the distribution layer.
Clause 17: A method for manufacturing a wind turbine blade component, the method comprising:
   placing a plurality of fibers on a mold surface of a wind turbine blade component mold;
   arranging a resin infusion feed channel assembly according to any of clauses 9 - 15 above the plurality of fibers to provide a resin communication between the resin feed channel and the plurality of fibers;
   arranging a vacuum bag on top of the resin infusion feed channel assembly and sealing the vacuum bag to the wind turbine blade component mold to define a mold cavity;
   generating a vacuum in the mold cavity;
   supplying resin to the mold cavity through the resin feed channel to fill the mold cavity and impregnate the plurality of fibers; and
   generating an under-pressure in the outlet flow of the air-removing valve for drawing air from the resin feed channel; and
   curing the resin to form the wind turbine blade component.
Clause 18: The method according to clause 17, comprising:
   sealingly connecting the inlet flow of the air-removing valve to the aperture of the air-removing portion of the resin feed channel.
Clause 19: The method according to any of clauses 17 - 18, wherein the air-removing valve comprises a housing to at least surround the air-removing portion of the resin feed channel and the inlet flow, and the housing comprises a connecting cavity to receive the air-removing portion of the resin feed channel, the method comprising:
   inserting the air-removing portion of the resin feed channel into the connecting cavity.
Clause 20: The method according to any of clauses 18 - 19, wherein sealingly connecting the inlet flow of the air-removing valve to the aperture is performed prior to arranging a resin infusion feed channel assembly above the plurality of layers.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. An air-removing valve (500) for removing air from inside a resin feed channel (410), wherein the air-removing valve (500) is to be arranged at an air-removing portion (420) of a resin feed channel (410), wherein the resin feed channel (410) is to feed resin into a mold cavity (312) of a wind turbine blade component mold (310), and wherein the air-removing portion (420) comprises an aperture (430); the air-removing valve (500) comprising:
an inlet flow (510) to be in fluid communication with the resin feed channel (410) through the aperture (430);
an outlet flow (520) to be coupled to an under-pressure generating source for drawing air from the air-removing valve (500);
a chamber (530) extending from the inlet flow (510) to the outlet flow (520); and
a membrane (540) arranged in the chamber (530), wherein the membrane (540) is to allow air to pass through and to stop resin from passing through.

2. The air-removing valve (500) according to claim 1, wherein the membrane (540) is arranged at the inlet flow (510).

3. The air-removing valve (500) according to any of claims 1 - 2, wherein the inlet flow (510) comprises a sealing connector (570) for sealingly connecting the inlet flow (510) to the aperture (430).

4. The air-removing valve (500) according to any of claims 1-3, comprising a housing (550) to at least surround the air-removing portion (420) of the resin feed channel (410) and the inlet flow (510).

5. The air-removing valve (500) according to claim 4, wherein the housing (550) comprises a connecting cavity (560) to receive the air-removing portion (420) of the resin feed channel (410).

6. The air-removing valve (500) according to any of claims 1-5, wherein the membrane (540) comprises a plurality of pores, wherein the size of the pores is greater than air components and smaller than resin components.

7. A resin infusion feed channel assembly (400) for feeding resin for manufacturing a wind turbine blade component, the resin infusion feed channel assembly (400) comprising:
a resin feed channel (410) for feeding resin into a mold cavity (312) of a wind turbine blade component mold (310), wherein the resin feed channel (410) comprises:
a feed channel inlet (411) to be coupled to a resin reservoir;
a feed channel outlet (412) for flowing resin from an inside of the resin feed channel (410) to the mold cavity (312) of the wind turbine blade component mold (310);
an air-removing portion (420) comprising an aperture (430);
an air-removing valve (500) according to any of claims 1 - 6, wherein the air-removing valve (500) is arranged at the air-removing portion (420) for removing air from inside the resin feed channel (410).

8. The resin infusion feed channel assembly (400) according to claim 7, wherein the resin feed channel (410) is to extend in a longitudinal direction having a highest region and a lowest region when arranged within the wind turbine blade component mold (310); and wherein the air-removing portion (420) is arranged at the highest region.

9. The resin infusion feed channel assembly (400) according to any of claims 7 - 8, wherein the aperture (430) comprises a notch formed on the resin feed channel (410).

10. The resin infusion feed channel assembly (400) according to any of claims 7 - 9, wherein the resin feed channel (410) comprises a first channel segment (423) and a second channel segment (424), and wherein the air-removing valve (500) connects the first channel segment (423) to the second channel segment (424).

11. The resin infusion feed channel assembly (400) according to any of claims 7 - 10, wherein the resin feed channel (410) extends between a first end and a second end, and wherein the aperture (430) is arranged at one of the first and the second end.

12. A method (700) for manufacturing a wind turbine blade component, the method comprising:
placing (710) a plurality of fibers (320) on a mold surface (311) of a wind turbine blade component mold (310);
arranging (720) a resin infusion feed channel assembly (400) according to any of claims 7-11 above the plurality of fibers (320) to provide a resin communication between the resin feed channel (410) and the plurality of fibers (320);
arranging (730) a vacuum bag (350) on top of the resin infusion feed channel assembly (400) and sealing the vacuum bag (350) to the wind turbine blade component mold (310) to define a mold cavity (312);
generating (740) a vacuum in the mold cavity (312);
supplying (750) resin to the mold cavity (312) through the resin feed channel (410) to fill the mold cavity (312) and impregnate the plurality of fibers (320); and
generating (760) an under-pressure in the outlet flow (520) of the air-removing valve (500) for drawing air from the resin feed channel (410); and
curing (770) the resin to form the wind turbine blade component.

13. The method (700) according to claim 12, comprising:
sealingly connecting the inlet flow (510) of the air-removing valve (500) to the aperture (430) of the air-removing portion (420) of the resin feed channel (410).

14. The method (700) according to any of claims 12 - 13, wherein the air-removing valve (500) comprises a housing (550) to at least surround the air-removing portion (420) of the resin feed channel (410) and the inlet flow (510) , and the housing (550) comprises a connecting cavity (560) to receive the air-removing portion (420) of the resin feed channel (410), the method (700) comprising:
inserting the air-removing portion (420) of the resin feed channel (410) into the connecting cavity (560).

15. The method (700) according to any of claims 12 - 14, wherein sealingly connecting the inlet flow (510) of the air-removing valve (500) to the aperture (430) is performed prior to arranging (720) a resin infusion feed channel assembly (400) above the plurality of layers (320).
